(19) **Europäisches Patentamt / European Patent Office / Office européen des brevets**

(11) **EP 4 174 132 A1**

(12) # EUROPEAN PATENT APPLICATION

(43) Date of publication:
**03.05.2023 Bulletin 2023/18**

(21) Application number: **22197663.2**

(22) Date of filing: **26.09.2022**

(51) International Patent Classification (IPC):
**C08L 23/28** (2006.01)     **C08L 7/00** (2006.01)
**C08K 5/3445** (2006.01)     **B60C 1/00** (2006.01)
**C08K 3/04** (2006.01)

(52) Cooperative Patent Classification (CPC):
**C08L 21/00; B60C 1/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2021   JP 2021174649**

(71) Applicant: **Sumitomo Rubber Industries, Ltd.**
**Kobe-shi, Hyogo 651-0072 (JP)**

(72) Inventors:
- **MATSUI, Ryoji**
  **Kobe-shi, 651-0072 (JP)**
- **YASUDA, Rie**
  **Kobe-shi, 651-0072 (JP)**

(74) Representative: **TBK**
**Bavariaring 4-6**
**80336 München (DE)**

(54) **RUBBER COMPOSITION AND TIRE**

(57)     Provided are a rubber composition and a tire which provide improved overall performance in terms of crack growth resistance and compression set. Included is a rubber composition which satisfies the following relationship (1): (1) $0.42 \leq Fw/Fa < 1.00$ wherein Fa and Fw denote the averages of stresses detected in atmospheric air at 23°C and water, respectively, using an atomic force microscope.

**Description**

TECHNICAL FIELD

The present invention relates to a rubber composition and a tire.

BACKGROUND ART

Various materials such as diene rubbers or fillers have been used in tire rubber compositions to improve tire performance (see, for example, Patent Literature 1). However, techniques for improving overall performance in terms of crack growth resistance and compression set have not been sufficiently studied.

CITATION LIST

PATENT LITERATURE

Patent Literature 1: WO 2013/125614

SUMMARY OF INVENTION

TECHNICAL PROBLEM

The present invention aims to solve the above problem and provide a rubber composition and a tire which provide improved overall performance in terms of crack growth resistance and compression set.

SOLUTION TO PROBLEM

The present invention relates to a tire, including a rubber composition, the rubber composition satisfying the following relationship (1):

$$(1)\ \ 0.42 \le Fw/Fa < 1.00$$

wherein Fa and Fw denote averages of stresses detected in atmospheric air at 23°C and water, respectively, using an atomic force microscope.

ADVANTAGEOUS EFFECTS OF INVENTION

The rubber composition according to the present invention satisfies relationship (1) with respect to Fa and Fw which denote the averages of stresses detected in atmospheric air at 23°C and water, respectively, using an atomic force microscope. Thus, the present invention provides a rubber composition and a pneumatic tire which have good overall performance in terms of crack growth resistance and compression set.

DESCRIPTION OF EMBODIMENTS

The rubber composition of the present invention satisfies relationship (1) with respect to Fa and Fw which denote the averages of stresses detected in atmospheric air at 23°C and water, respectively, using an atomic force microscope.
The reason why the rubber composition satisfying relationship (1) provides improved overall performance in terms of crack growth resistance and compression set is not clear, but is believed to be as follows.
The stress detected using an atomic force microscope (AFM) is considered to indicate the hardness of the microstructures in a rubber composition. Thus, satisfying the relationship: (Stress detected in water using AFM)/(Stress detected in atmospheric air using AFM) < 1.00 is considered to mean that the hardness of the micro-regions in the rubber interior is reduced in water compared to that in atmospheric air. Moreover, such a change in hardness in water is generally considered to be caused by reversible binding through hydrogen bonds. Accordingly, the rubber composition satisfying the relationship is considered such that domains connected by hydrogen bonds are dispersed in the rubber interior, and they are capable of being reversibly bound/cleaved. Thus, it is considered that the rubber composition in which reversible bonds are formed in the rubber interior provides improved crack growth resistance as, even when a crack occurs, the bonds can be re-formed in the rubber interior. However, such bonds have a low resistance to strain such as compression deformation and are considered to be relatively weak, but further satisfying the relationship: (Stress detected in water using AFM)/(Stress detected in atmospheric air using AFM) ≥ 0.42 provides resilience in the chemically strongly connected domains of usual rubbers such as diene rubbers, thereby imparting good crack growth resistance and recovery from strain. Therefore, it is believed that the present invention can provide a rubber composition having significantly improved overall performance in terms of crack growth resistance and compression set.

As described above, the present invention solves the problem (purpose) of improving overall performance in terms of crack growth resistance and compression set by formulating a rubber composition which satisfies relationship (1) with respect to Fa and Fw (the averages of stresses detected in atmospheric air at 23°C and water, respectively, using an AFM). In other words, the parameter of relationship (1): $0.42 \leq Fw/Fa < 1.00$ does not define the problem (purpose), and the problem herein is to improve overall performance in terms of crack growth resistance and compression set. In order to solve this problem, the rubber composition has been formulated to satisfy the parameter.

The rubber composition satisfies the following relationship (1):

$$(1) \quad 0.42 \leq Fw/Fa < 1.00$$

wherein Fa denotes the average of stresses detected in atmospheric air at 23°C using an AFM, and Fw denotes the average of stresses detected in water using the AFM.

The lower limit of the ratio of Fw/Fa is preferably 0.43 or higher, more preferably 0.45 or higher, still more preferably 0.50 or higher, particularly preferably 0.57 or higher. The upper limit is preferably 0.90 or lower, more preferably 0.85 or lower, still more preferably 0.80 or lower, particularly preferably 0.75 or lower. When the ratio is within the range indicated above, the advantageous effect tends to be suitably achieved.

The rubber composition preferably satisfies the following relationship with respect to Fa [MPa]:

$$Fa \geq 3.0 \text{ MPa}.$$

Fa is preferably 4.0 MPa or more, more preferably 4.5 MPa or more, still more preferably 5.0 MPa or more, particularly preferably 5.5 MPa or more. The upper limit of Fa is not limited, but is preferably 8.0 MPa or less, more preferably 7.5 MPa or less, still more preferably 7.0 MPa or less, particularly preferably 6.5 MPa or less. When Fa is within the range indicated above, the advantageous effect tends to be suitably achieved.

Herein, the averages of stresses Fa and Fw can be measured using an AFM, specifically as described in EXAMPLES.

Here, the atomic force microscope (AFM) is equipped with a cantilever with a probe attached to the tip, and when a sample is observed using the AFM, the probe scans the surface of the sample. The probe moves along the surface of the sample. The movement of the probe is detected by the cantilever. AFM can measure the mechanical properties (e.g., stress, hardness, elastic modulus) of the surface of the sample. Moreover, the movement of the probe detected by the cantilever may be imaged to obtain an AFM image, which may be used to detect a three-dimensional shape of the surface of the sample.

Non-limiting examples of usable AFM systems include MultiMode 8 available from Bruker AXS and E-sweep available from Hitachi High-Tech Science Corporation. The AFM measurement conditions may be appropriately selected according to the type and surface conditions of the sample. For example, a probe made of a material such as tungsten, iridium, or silicon nitride may be used.

The mechanical properties can be measured using any mode of AFM which can be appropriately selected. Examples of the measurement mode include force modulation mode, force volume mode, and force curve mode. Other examples include contact mode, tapping mode, and non-contact mode.

To suitably achieve the advantageous effect, the rubber composition preferably has a hardness that reversibly changes with water.

Herein, the phrase "hardness that reversibly changes with water" means that the hardness of the (vulcanized) rubber composition reversibly increases or decreases depending on the presence of water. Here, it is sufficient that the hardness reversibly change when the state changes, for example, as follows: dry → wet with water → dry. The hardness in the former dry state may be the same as or different from that in the latter dry state.

Herein, the term "hardness before being wet with water" refers to the hardness of the (vulcanized) rubber composition in the dry state before being wet with water, and specifically refers to the hardness of the (vulcanized) rubber composition which has been dried before being wet with water, as described in EXAMPLES.

Herein, the term "hardness when wet with water" refers to the hardness of the (vulcanized) rubber composition in the water-wet state, and specifically refers to the hardness of the (vulcanized) rubber composition which has been wet with water as described in EXAMPLES.

Herein, the hardness (JIS-A hardness) of the (vulcanized) rubber composition is measured at 25°C using a type A durometer in accordance with JIS K6253-3:2012 "Rubber, vulcanized or thermoplastic -Determination of hardness-Part 3: Durometer method".

To suitably achieve the advantageous effect, the rubber composition preferably satisfies the following relationship (2):

$$(2) \quad \text{Hsw/Hsa} \times 100 \leq 98$$

wherein Hsw denotes the hardness when wet with water, and Hsa denotes the hardness before being wet with water.

The value of "Hsw/Hsa $\times$ 100" [(Hardness of (vulcanized) rubber composition when wet with water)/(Hardness of (vulcanized) rubber composition before being wet with water) $\times$ 100] is preferably 97 or less, more preferably 96 or less, still more preferably 95 or less, particularly preferably 93 or less, but is preferably 85 or more, more preferably 88 or more, still more preferably 90 or more, particularly preferably 91 or more. When the value is within the range indicated above, the advantageous effect tends to be suitably achieved.

The reason why the rubber composition satisfying relationship (2) provides further improved overall performance in terms of crack growth resistance and compression set is not clear, but is believed to be as follows.

It is considered that the properties of relationship (2) are attributed to, for example, the presence of reversible bonds capable of being cut and re-formed, such as ionic bonds or hydrogen bonds, in the rubber matrix, and thus, even once a crack occurs, the bonds can be formed again to inhibit crack propagation.

Therefore, it is believed that the overall performance in terms of crack growth resistance and compression set can be significantly improved.

The hardness Hsa (the hardness of the (vulcanized) rubber composition before being wet with water) is preferably 30 or higher, more preferably 35 or higher, still more preferably 37 or higher, particularly preferably 39 or higher, but is preferably 50 or lower, more preferably 47 or lower, still more preferably 45 or lower, particularly preferably 43 or lower. When Hsa is within the range indicated above, the advantageous effect tends to be suitably achieved.

Here, the rubber composition can satisfy the relationship (1): $0.42 \leq \text{Fw/Fa} < 1.00$ or the relationship (2): Hsw/Hsa $\times$ 100 $\leq$ 98 when, for example, it contains bonds which are capable of being reversibly cut or re-formed by addition of water or drying, such as hydrogen bonds or ionic bonds. Specifically, for example, the relationships may be accomplished by combining a rubber modified with an ionic functional group with a compound having an opposite charge to that of the ionic functional group to form an ionic bond between them.

The average Fa of stresses detected in atmospheric air at 23°C using an AFM may be controlled by the types and amounts of the chemicals (in particular, rubber components, fillers, softeners, sulfur) blended in the rubber composition. For example, Fa tends to be increased by reducing the amount of softeners, or increasing the amount of fillers, or increasing the amount of sulfur, while Fa tends to be reduced by increasing the amount of softeners, or reducing the amount of fillers, or reducing the amount of sulfur.

The average Fw of stresses detected in water using an AFM may be reduced compared to that in atmospheric air at 23°C, for example, by allowing the rubber composition to have rubber molecules crosslinked by ionic bonds. Moreover, Fw may be controlled by the types and amounts of the chemicals (in particular, rubber components, fillers, softeners, sulfur) blended in the rubber composition. For example, Fw tends to be increased by reducing the amount of softeners, or increasing the amount of fillers, or increasing the amount of sulfur, while Fw tends to be reduced by increasing the amount of softeners, or reducing the amount of fillers, or reducing the amount of sulfur.

The hardness when dry (before being wet with water) may be controlled by the types and amounts of the chemicals (in particular, rubber components, fillers, softeners, sulfur) blended in the rubber composition. For example, it tends to be increased by reducing the amount of softeners, or increasing the amount of fillers, or increasing the amount of sulfur, while it tends to be reduced by increasing the amount of softeners, or reducing the amount of fillers, or reducing the amount of sulfur.

The hardness when wet with water may be reduced compared to when dry, for example, by allowing the rubber composition to have rubber molecules crosslinked by ionic bonds. Moreover, it may be controlled by the types and amounts of the chemicals (in particular, rubber components, fillers, softeners, sulfur) blended in the rubber composition. For example, it tends to be increased by reducing the amount of softeners, or increasing the amount of fillers, or increasing the amount of sulfur, while it tends to be reduced by increasing the amount of softeners, or reducing the amount of fillers, or reducing the amount of sulfur.

Usable chemicals are described below.

Non-limiting examples of rubber components include rubbers that can be crosslinked mainly with sulfur (sulfur-crosslinkable rubbers). Examples of sulfur-crosslinkable rubbers include diene rubbers such as isoprene-based rubbers, polybutadiene rubbers (BR), styrene-butadiene rubbers (SBR), and styrene-isoprene-butadiene rubbers (SIBR). Examples of isoprene-based rubbers include natural rubbers (NR), polyisoprene rubbers (IR), refined NR, modified NR, and modified IR. Each of these may be used alone, or two or more of these may be used in combination. SBR, BR, and isoprene-based rubbers are preferred among these, with isoprene-based rubbers being more preferred, with NR being still more preferred.

In addition to the sulfur-crosslinkable rubbers, rubbers that can be crosslinked mainly through ionic bonds (ionically crosslinkable rubbers) may also be used as the rubber components. The term "ionically crosslinkable rubbers" refers to rubbers having ionic functional groups. Examples of the ionic functional groups include anionic functional groups and cationic functional groups.

Ionically crosslinkable rubbers may each have one or two or more ionic functional groups.

Examples of anionic functional groups include halogen groups and acidic functional groups. Examples of halogen groups include a fluoro group, a chloro group, a bromo group, and an iodo group. Examples of acidic functional groups include a carboxylic acid group, a sulfonic acid group, a sulfuric acid group, a phosphonic acid group, a phosphoric acid group, a phosphinic acid group, a maleic acid group, acid anhydride groups (e.g., a maleic anhydride group), a fumaric acid group, an itaconic acid group, an acrylic acid group, a methacrylic acid group, and a mercapto group. Halogen and carboxylic acid groups are preferred among these, with halogen groups being more preferred.

Examples of cationic functional groups include basic functional groups. Examples of basic functional groups include an amino group, an imino group (=NH), ammonium salt groups, and heterocyclic groups containing basic nitrogen atoms. The amino group may be a primary amino group ($-NH_2$), a secondary amino group (-NHR), or a tertiary amino group (-NRR'). R and R' each represent, for example, an alkyl group, a phenyl group, or an aralkyl group, and the number of carbon atoms thereof is preferably 1 to 8. Examples of ammonium salt groups include tertiary ammonium salt groups and quaternary ammonium salt groups. Examples of heterocyclic groups containing basic nitrogen atoms include nitrogen-containing heterocyclic groups such as a pyridine group, a pyrimidine group, a pyrazine group, an imidazole group, a thiol-containing imidazole group, a triazole group, and a thiazole group. The heterocyclic groups have double bonds and therefore can be easily dispersed in rubbers. Preferred among these are a pyridine group, an imidazole group, a thiazole group, and an amino group (amine group), with an imidazole group being more preferred.

Examples of rubbers into which ionic functional groups are to be introduced include diene rubbers as described for the sulfur-crosslinkable rubbers, and non-diene rubbers containing no or a very small amount of diene compounds, such as butyl rubbers, polyurethane rubbers, and silicone rubbers. Each of these may be used alone, or two or more of these may be used in combination. Non-diene rubbers are preferred among these, with butyl rubbers being more preferred.

In the ionically crosslinkable rubbers which have been modified with ionic functional groups, the ionic functional group content based on 100% by mass of the ionically crosslinkable rubber is preferably 0.5% by mass or higher, more preferably 0.8% by mass or higher, still more preferably 1.0% by mass or higher, but is preferably 40% by mass or lower, more preferably 20% by mass or lower, still more preferably 10% by mass or lower. When the content is within the range indicated above, the advantageous effect tends to be suitably achieved.

Here, the ionic functional group content (% by mass) can be determined based on the peaks corresponding to ionic functional groups measured by NMR.

To suitably achieve the advantageous effect, the rubber composition preferably contains one or more of the above-described ionically crosslinkable rubbers as rubber components and preferably contains one or more of the above-described ionically crosslinkable rubbers and one or more of the above-described sulfur-crosslinkable rubbers.

The amount of sulfur-crosslinkable rubbers based on 100% by mass of the rubber component content is preferably 20% by mass or more, more preferably 40% by mass or more, still more preferably 60% by mass or more, but is preferably 95% by mass or less, more preferably 85% by mass or less, still more preferably 80% by mass or less. When the amount is within the range indicated above, the advantageous effect tends to be suitably achieved.

The amount of ionically crosslinkable rubbers based on 100% by mass of the rubber component content is preferably 20% by mass or more, more preferably 40% by mass or more, still more preferably 60% by mass or more, but is preferably 95% by mass or less, more preferably 85% by mass or less, still more preferably 80% by mass or less. When the amount is within the range indicated above, the advantageous effect tends to be suitably achieved.

Moreover, to suitably achieve the advantageous effect, the amount of ionically crosslinkable rubbers is preferably less than the amount of sulfur-crosslinkable rubbers. The value of "Amount of sulfur-crosslinkable rubbers - Amount of ionically crosslinkable rubbers" is preferably 5% by mass or more, more preferably 10% by mass or more, still more preferably 20% by mass or more, but is preferably 95% by mass or less, more preferably 85% by mass or less, still more preferably 80% by mass or less.

Preferably, an ionically crosslinkable rubber is combined with an ionic compound containing an ionic functional group 2 that has an opposite charge to that of the ionic functional group (ionic functional group 1) of the ionically crosslinkable rubber to form an ionic bond between the ionically crosslinkable rubber and the ionic compound.

Examples of the ionic functional group 2 include those as described above for the ionic functional group 1. When the ionic functional group 2 is an anionic functional group, it is preferably a halogen group or a carboxylic acid group, more preferably a halogen group. When the ionic functional group 2 is a cationic functional group, it is preferably a pyridine group, an imidazole group, a thiazole group, or an amino (amine) group, more preferably an imidazole group.

Examples of the ionic compound containing an anionic functional group include dicarboxylic acids. Specific examples include aliphatic dicarboxylic acids (adipic acid, suberic acid, azelaic acid, sebacic acid, dodecanedioic acid, etc.); aromatic dicarboxylic acids (terephthalic acid, isophthalic acid, 2-chloroterephthalic acid, 2-methylterephthalic acid, 5-methylisophthalic acid, sodium 5-sulfoisophthalic acid, hexahydroterephthalic acid, hexahydroisophthalic acid, etc.); and alicyclic dicarboxylic acids (1,4-cyclohexanedicarboxylic acid, etc.). From the standpoint of properties such as crack growth resistance (self-healing ability), aliphatic dicarboxylic acids are preferred among these, with suberic acid, adipic acid, sebacic acid, and dodecanedioic acid being more preferred.

Specific examples of the ionic compound containing a cationic functional group include imidazoles (imidazole, N-isobutylimidazole, 1-methylimidazole, 2-methylimidazole, 2-ethylimidazole, 2-n-propylimidazole, 2-isopropylimidazole, 1-butylimidazole, 2-butylimidazole, 2-phenylimidazole, 4-methylimidazole, 4-ethylimidazole, 4-nitroimidazole, 4-phenylimidazole, 2-methyl-4-phenylimidazole, 4,5-dimethylimidazole, 1-isobutyl-2-methylimidazole, 2,4,5-trimethylimidazole, 2,4,5-triphenylimidazole, benzimidazole, 2-methylbenzimidazole, 2-phenylbenzimidazole, etc.); pyridines (pyridine, 2-isobutylpyridine, 3-isobutylpyridine, 3-methylpyridine, 4-methylpyridine, 2-ethylpyridine, 3-ethylpyridine, 4-ethylpyridine, 4-propylpyridine, 2-n-hexylpyridine, 3-n-hexylpyridine, 3,5-dimethylpyridine, 3,5-diethylpyridine, 2,6-di-tert-butylpyridine, 2-benzylpyridine, 4-benzylpyridine, 2-phenylpyridine, 3-phenylpyridine, 4-phenylpyridine, 2,6-diphenylpyridine, 2-(3-phenylpropyl)pyridine, 4-(3-phenylpropyl)pyridine, etc.); thiazoles (thiazole, 2-aminothiazole, 2-methylthiazole, 2-methoxythiazole, 2-ethoxythiazole, 2-isobutylthiazole, 2-trimethylsilylthiazole, 5-trimethylsilylthiazole, 4-methylthiazole, 4,5-dimethylthiazole, 2-ethylthiazole, 2,4-dimethylthiazole, 2-amino-5-methylthiazole, 2-amino-4-methylthiazole, 2,4,5-trimethylthiazole, benzothiazole, 2-methylbenzothiazole, 2,5-dimethylbenzothiazole, etc.); alkylenediamines (methylenediamine, ethylenediamine, propylenediamine, butylenediamine, etc.); and polyamines (diethylenetriamine, triethylenetetramine, tetraethylenepentamine, pentaethylenehexamine, etc.). From the standpoint of properties such as crack growth resistance (self-healing ability), methylimidazole, butylimidazole, pyridine, and ethylenediamine are preferred among these, with butylimidazole being more preferred.

In addition to the above-mentioned compounds, metallic salts may also be used as ionic compounds. Examples of such metallic salts include sodium acetate, sodium carbonate, and potassium acetate. Sodium acetate is preferred among these.

The ionic functional group 1 of the ionically crosslinkable rubber is preferably an anionic functional group, and the ionic functional group 2 of the ionic compound is preferably a cationic group. This is because the advantageous effect tends to be suitably achieved.

From the standpoint of self-healing ability, the amount of ionic compounds per 100 parts by mass of the rubber component content is preferably 0.6 parts by mass or more, more preferably 0.9 parts by mass or more, still more preferably 1.2 parts by mass or more, particularly preferably 1.8 parts by mass or more, but is preferably 6.5 parts by mass or less, more preferably 4.5 parts by mass or less, still more preferably 2.4 parts by mass or less.

The rubber composition preferably contains a filler.

Examples of the filler include those known in the rubber field, such as silica, carbon black, calcium carbonate, talc, alumina, clay, aluminum hydroxide, aluminum oxide, and mica. Silica and carbon black are preferred among these, with carbon black being more preferred.

Non-limiting examples of carbon black include GPF, FEF, HAF, ISAF, and SAF. Examples of commercial products include those from Asahi Carbon Co., Ltd., Cabot Japan K.K., Tokai Carbon Co., Ltd., Mitsubishi Chemical Corporation, Lion Corporation, Nippon Steel Carbon Co., Ltd., and Columbia Carbon.

The amount of carbon black per 100 parts by mass of the rubber component content is preferably 12 parts by mass or more, more preferably 16 parts by mass or more, still more preferably 24 parts by mass or more, but is preferably 70 parts by mass or less, more preferably 45 parts by mass or less, still more preferably 32 parts by mass or less.

The nitrogen adsorption specific surface area ($N_2SA$) of the carbon black is preferably 80 $m^2/g$ or more, more preferably 100 $m^2/g$ or more, still more preferably 110 $m^2/g$ or more, but is preferably 160 $m^2/g$ or less, more preferably 140 $m^2/g$ or less, still more preferably 125 $m^2/g$ or less.

Here, the nitrogen adsorption specific surface area of the carbon black is measured in accordance with JIS K6217-2:2001.

Examples of silica include dry silica (anhydrous silica) and wet silica (hydrous silica). Wet silica is preferred among these because it contains a large number of silanol groups.

The amount of silica per 100 parts by mass of the rubber component content is preferably 5 parts by mass or more, more preferably 20 parts by mass or more, still more preferably 30 parts by mass or more, but is preferably 150 parts by mass or less, more preferably 100 parts by mass or less, still more preferably 80 parts by mass or less.

The nitrogen adsorption specific surface area ($N_2SA$) of the silica is preferably 30 $m^2/g$ or more, more preferably 100 $m^2/g$ or more, still more preferably 125 $m^2/g$ or more, but is preferably 300 $m^2/g$ or less, more preferably 250 $m^2/g$ or less, still more preferably 200 $m^2/g$ or less.

Here, the nitrogen adsorption specific surface area of the silica is measured by a BET method in accordance with ASTM D3037-81.

The silica may be commercially available from, for example, Degussa, Rhodia, Tosoh Silica Corporation, Solvay Japan, Tokuyama Corporation, etc.

The silica is preferably combined with a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercial products include those from Degussa, Momentive, Shin-Etsu Silicone, Tokyo Chemical Industry Co., Ltd., AZmax. Co., and Dow Corning Toray Co., Ltd. These may be used alone or in combinations of two or more. Sulfide or mercapto silane coupling agents are preferred among these.

The amount of silane coupling agents per 100 parts by mass of the silica content is preferably 3 parts by mass or more, more preferably 5 parts by mass or more, but is preferably 20 parts by mass or less, more preferably 15 parts by mass or less.

The rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from, for example, Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The amount of sulfur per 100 parts by mass of the rubber component content is preferably 0.5 parts by mass or more, more preferably 0.8 parts by mass or more, still more preferably 1.0 parts by mass or more, but is preferably 6.0 parts by mass or less, more preferably 4.0 parts by mass or less, still more preferably 3.0 parts by mass or less.

The rubber composition may contain a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide or guanidine vulcanization accelerators are preferred among these.

The amount of vulcanization accelerators per 100 parts by mass of the rubber component content is preferably 1.0 parts by mass or more, more preferably 2.0 parts by mass or more, still more preferably 2.5 parts by mass or more, but is preferably 10.0 parts by mass or less, more preferably 6.0 parts by mass or less, still more preferably 4.0 parts by mass or less.

The rubber composition may contain an oil.

Examples of the oil include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. Process oils are preferred among these, with aromatic process oils being particularly preferred.

The amount of oils per 100 parts by mass of the rubber component content is preferably 2 parts by mass or more, more preferably 5 parts by mass or more, still more preferably 7 parts by mass or more, but is preferably 50 parts by mass or less, more preferably 30 parts by mass or less, still more preferably 20 parts by mass or less. Here, the amount of oils includes the amount of the oils (extender oils) contained in the rubbers (oil extended rubbers), if used.

The rubber composition may contain a resin.

Any resin generally used in the tire industry may be used, and examples include rosin resins, coumarone-indene resins, α-methylstyrene resins, terpene resins, p-t-butylphenol acetylene resins, acrylic resins, C5 resins, and C9 resins. Examples of commercial products include those from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., and Toagosei Co., Ltd. These may be used alone or in combinations of two or more.

The amount of resins per 100 parts by mass of the rubber component content is preferably 1 part by mass or more, more preferably 5 parts by mass or more, but is preferably 30 parts by mass or less, more preferably 20 parts by mass or less.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Petroleum waxes are preferred among these, with paraffinic waxes being more preferred.

The waxes may be commercially available from, for example, Ouchi Shinko Chemical Industrial Co., Ltd., Nippon Seiro Co., Ltd., Seiko Chemical Co., Ltd., etc.

The amount of waxes per 100 parts by mass of the rubber component content is preferably 0.3 parts by mass or more, more preferably 0.5 parts by mass or more, but is preferably 20 parts by mass or less, more preferably 10 parts by mass or less.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Among these, p-phenylenediamine or quinoline antioxidants are preferred.

The antioxidants may be commercially available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component content is preferably 0.5 parts by mass or more, more preferably 1 part by mass or more, but is preferably 10 parts by mass or less, more preferably 5 parts by mass or less.

The rubber composition may contain stearic acid.

The stearic acid used may be a conventional one, and examples include commercial products of NOF Corporation, Kao Corporation, FUJIFILM Wako Pure Chemical Corporation, and Chiba Fatty Acid Co., Ltd.

The amount of stearic acid per 100 parts by mass of the rubber component content is preferably 0.5 parts by mass or more, more preferably 1 part by mass or more, but is preferably 10 parts by mass or less, more preferably 5 parts by mass or less.

The rubber composition may contain zinc oxide.

The zinc oxide used may be a conventional one, and examples include commercial products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of zinc oxide per 100 parts by mass of the rubber component content is preferably 0.5 parts by mass or more, more preferably 1 part by mass or more, but is preferably 10 parts by mass or less, more preferably 5 parts by mass or less.

In addition to the above-mentioned components, the rubber composition may further contain other compounding agents (e.g., organic crosslinking agents) commonly used in the tire industry. The amounts of such compounding agents are each preferably 0.1 to 200 parts by mass per 100 parts by mass of the rubber component content.

The rubber composition may be prepared, for example, by kneading the components in a rubber kneading machine such as an open roll mill or a Banbury mixer, and then press-forming the kneaded mixture.

The components may be kneaded under kneading conditions including a kneading temperature of usually 100 to 180°C, preferably 120 to 170°C, and a kneading duration of usually 1 to 30 minutes, preferably 2 to 10 minutes. The kneaded mixture obtained by kneading may be press-formed (vulcanized) under conditions including a temperature of usually 140 to 190°C, preferably 150 to 185°C, and a duration of usually 1 to 60 minutes, preferably 5 to 30 minutes.

The rubber composition may be used in tire components (i.e., as a tire rubber composition), including for example treads (cap treads), sidewalls, base treads, undertreads, clinches, bead apexes, breaker cushion rubbers, rubbers for carcass cord topping, insulations, chafers, and innerliners, and side reinforcement layers of run-flat tires.

The tire (e.g., pneumatic tire) of the present invention can be produced from the above-described rubber composition by usual methods.

Specifically, the rubber composition before vulcanization may be extruded into the shape of a tire component such as a tread and assembled with other tire components in a usual manner on a tire building machine to build an unvulcanized tire, which may then be heated and pressurized in a vulcanizer to produce a tire.

Here, it is sufficient that the tire at least partially (for example, the tread) include the rubber composition, and the entire tire may include the rubber composition.

The tire may be used as a tire for passenger vehicles, large passenger vehicles, large SUVs, heavy duty vehicles such as trucks and buses, light trucks, or motorcycles, or as a racing tire (high performance tire), etc. The tire may also be used as an all season tire, a summer tire, a studless winter tire, a cold weather tire, etc.

EXAMPLES

The present invention is specifically described with reference to, but not limited to, examples.

Bromobutyl rubber: BROMOBUTYL 2255 (a butyl rubber containing an anionic functional group (bromo group), anionic functional group: 1.0% by mass) available from ExxonMobil Chemical

Natural rubber: TSR20

Carbon black: SHOBLACK N220 ($N_2SA$: 111 m²/g) available from Cabot Japan K.K.

Imidazole: 1-butylimidazole (cationic compound) available from Tokyo Chemical Industry Co., Ltd.

Zinc oxide: zinc oxide #2 available from Mitsui Mining & Smelting Co., Ltd.

Sulfur: powdered sulfur available from Tsurumi Chemical Industry Co., Ltd.

Vulcanization accelerator: NOCCELER NS (N-tert-butyl-2-benzothiazylsulfenamide, TBBS) available from Ouchi Shinko Chemical Industrial Co., Ltd.

(Examples and Comparative Examples)

According to the formulation recipe shown in Table 1, the chemicals other than the sulfur and vulcanization accelerator were kneaded at 150°C for 5 minutes using a 1.7 L Banbury mixer (Kobe Steel, Ltd.) to give a kneaded mixture (base kneading step).

Then, the sulfur and vulcanization accelerator were added to the kneaded mixture, and they were kneaded at 80°C for 4 minutes using an open roll mill to give an unvulcanized rubber composition (final kneading step).

The unvulcanized rubber composition was press-formed in a 2 mm-thick mold at 170°C for 10 minutes to give a vulcanized rubber composition (sheet) (vulcanization step).

The rubber compositions (vulcanized (crosslinked) rubber compositions) prepared as above were evaluated as described below. Table 1 shows the results.

<Measurement of stress using atomic force microscope>

A sample having a 2-μm square measurement surface and a thickness of 3 μm was measured at 23°C in an air atmosphere at 64 points per side using an atomic force microscope equipped with a probe having a tip radius of 7 nm to detect the stresses at the points, which were averaged to determine Fa.

Subsequently, the measured sample was immersed in water for 24 hours. Then, the stresses at 64 points per side were detected in water in the same manner as in atmospheric air, but using a holder for measurement in liquid (system attachment), and then averaged to determine Fw.

(Measurement conditions)

System: MultiMode 8 available from Bruker AXS

Measurement area: 10 μm × 10 μm

Cantilever: 0.5 N/m

Frequency: 5 Hz

<Measurement of hardness>

The shore hardness (Hs, JIS-A hardness) of a specimen (in a 30 mm × 30 mm × 4 mm rectangular parallelepiped shape) prepared from the vulcanized rubber composition was measured using a type A durometer in accordance with JIS K6253-3:2012 "Rubber, vulcanized or thermoplastic - Determination of hardness- Part 3: Durometer method". The hardness before being wet with water (Hsa) and the hardness when wet with water (Hsw) were each measured at 25°C. The values are the average of five measurements.

(Conditions for treatment of specimen)

Before being wet with water: The specimen was dried under a reduced pressure at 80°C and 1 kPa or lower to a constant weight.
When wet with water: The specimen was immersed in 20 mL of water at 25°C for six hours.

<Crack growth resistance>

A flex crack growth test was performed in accordance with JIS K6260:2017 in which the rubber composition (sheet) was bent by repeating 70% elongation one million times, and then the length of the generated crack was measured. The results are expressed as an index relative to the reciprocal of the measured value of Comparative Example 1 taken as 100. A higher index indicates a smaller crack and better crack growth resistance.

<Strain recovery>

The compression set (%) of the rubber composition was measured in accordance with JIS K6262:2013, and the strain recovery (%) was calculated as the value of "100 - Compression set (%)". The results are expressed as an index relative to the calculated value of Comparative Example 1 taken as 100. A higher index indicates a higher strain recovery, i.e., a lower compression set.

<Overall performance>

Regarding overall performance in terms of crack growth resistance and compression set, the sum of the crack growth resistance (index) and the strain recovery (index) was used to evaluate the overall performance in terms of these properties. A larger sum indicates better overall performance.

[Table 1]

| Formulation (parts by mass) | | Comparative Example 1 | Comparative Example 2 | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Formulation (parts by mass) | Bromobutyl rubber | 100 | | 20 | 40 | 60 | 80 | 100 | 20 | 40 | 60 | 80 | 100 |
| | Natural rubber | | 100 | 80 | 60 | 40 | 20 | | 80 | 60 | 40 | 20 | |
| | Carbon black | | 32 | 32 | 24 | 16 | 8 | 32 | 16 | 12 | 8 | 4 | 16 |
| | Imidazole | | | 0.6 | 1.2 | 1.8 | 2.4 | 3 | 0.6 | 1.2 | 1.8 | 2.4 | 3 |
| | Zinc oxide | 2 | 2 | 2 | 2 | 2 | 2 | 2 | 2 | 2 | 2 | 2 | 2 |
| | Sulfur | 1 | 1 | 1 | 1 | 1 | 1 | 1 | 1 | 1 | 1 | 1 | 1 |
| | Vulcanization accelerator | 2.5 | 2.5 | 2.5 | 2.5 | 2.5 | 2.5 | 2.5 | 2.5 | 2.5 | 2.5 | 2.5 | 2.5 |
| Evaluation | $F_a$ (MPa) | 7.1 | 3.6 | 4.8 | 5.6 | 6 | 6.2 | 7.9 | 4 | 5.6 | 5.7 | 5.9 | 7.5 |
| | $F_w$ (MPa) | 9.6 | 3.8 | 2.7 | 2.8 | 2.7 | 2.8 | 3.4 | 2.3 | 2.9 | 2.7 | 2.5 | 3.2 |
| | $F_w/F_a$ | 1.33 | 1.06 | 0.57 | 0.50 | 0.46 | 0.45 | 0.43 | 0.58 | 0.52 | 0.47 | 0.42 | 0.43 |
| | $H_{sa}$ | 35 | 47 | 49 | 46 | 39 | 37 | 47 | 43 | 43 | 37 | 35 | 42 |
| | $H_{sw}$ | 33 | 46 | 44 | 42 | 34 | 32 | 41 | 40 | 39 | 33 | 31 | 37 |
| | $H_{sw}/H_{sa} \times 100$ | 94 | 98 | 90 | 91 | 87 | 86 | 87 | 93 | 91 | 89 | 89 | 88 |
| | (a) Crack growth resistance (index) | 100 | 103 | 151 | 162 | 165 | 168 | 180 | 158 | 170 | 172 | 181 | 190 |
| | (b) Strain recovery (index) | 100 | 102 | 101 | 96 | 80 | 78 | 63 | 96 | 92 | 75 | 65 | 51 |
| | Overall performance (= (a) + (b)) | 200 | 205 | 252 | 258 | 245 | 246 | 243 | 254 | 262 | 247 | 246 | 241 |

As shown in Table 1, the rubber compositions of the examples satisfying the relationship (1): $0.42 \leq F_w/F_a < 1.00$ exhibited significantly better overall performance in terms of crack growth resistance and compression set (as expressed by the sum of the two indices of crack growth resistance and strain recovery) than those of the comparative examples not satisfying the relationship (1).

Exemplary embodiments of the present invention include:

Embodiment 1. A tire, including a rubber composition, the rubber composition satisfying the following relationship (1):

$$(1)\ \ 0.42 \leq Fw/Fa < 1.00$$

wherein Fa and Fw denote averages of stresses detected in atmospheric air at 23°C and water, respectively, using an atomic force microscope.

Embodiment 2. The tire according to Embodiment 1, wherein the rubber composition satisfies the following relationship:

$$0.50 \leq Fw/Fa < 1.00.$$

Embodiment 3. The tire according to Embodiment 1 or 2, wherein the rubber composition satisfies the following relationship (2):

$$(2)\ \ Hsw/Hsa \times 100 \leq 98$$

wherein Hsw and Hsa denote hardnesses when wet with water and before being wet with water, respectively.

Embodiment 4. The tire according to Embodiment 3, wherein the rubber composition satisfies the following relationship:

$$90 \leq Hsw/Hsa \times 100 \leq 98.$$

Provided are a rubber composition and a tire which provide improved overall performance in terms of crack growth resistance and compression set. Included is a rubber composition which satisfies the following relationship (1): (1) $0.42 \leq Fw/Fa < 1.00$ wherein Fa and Fw denote the averages of stresses detected in atmospheric air at 23°C and water, respectively, using an atomic force microscope.

**Claims**

1. A tire, comprising a rubber composition, the rubber composition satisfying the following relationship (1) :

$$(1)\ \ 0.42 \leq Fw/Fa < 1.00$$

wherein Fa and Fw denote averages of stresses detected in atmospheric air at 23°C and water, respectively, using an atomic force microscope.

2. The tire according to claim 1, wherein the rubber composition satisfies the following relationship:

$$0.50 \leq Fw/Fa < 1.00.$$

3. The tire according to claim 1 or 2, wherein the rubber composition satisfies the following relationship (2):

$$(2)\ \ Hsw/Hsa \times 100 \leq 98$$

wherein Hsw and Hsa denote hardnesses when wet with water and before being wet with water, respectively.

4. The tire according to claim 3,
   wherein the rubber composition satisfies the following relationship:

$$90 \leq Hsw/Hsa \times 100 \leq 98.$$

| | Europäisches Patentamt European Patent Office Office européen des brevets | **EUROPEAN SEARCH REPORT** | **Application Number** EP 22 19 7663 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | BUBENDORF ALEXANDRE ET AL: "A robust AFM-based method for locally measuring the elasticity of samples", BEILSTEIN JOURNAL OF NANOTECHNOLOGY, vol. 9, no. 9, 2 January 2018 (2018-01-02), pages 1-10, XP093024885, DOI: 10.3762/bjnano.9.1 Retrieved from the Internet: URL:https://www.ncbi.nlm.nih.gov/pmc/artic les/PMC5769082/pdf/Beilstein_J_Nanotechnol -09-01.pdf> [retrieved on 2023-02-17] * page 3; figures 3-4 * ----- | | INV. C08L23/28 C08L7/00 C08K5/3445 B60C1/00 ADD. C08K3/04 |
| A | FANG SHIFENG ET AL: "Rubber-reinforced rubbers toward the combination of high reinforcement and low energy loss", NANO ENERGY, ELSEVIER, NL, vol. 83, 27 January 2021 (2021-01-27), XP086943101, ISSN: 2211-2855, DOI: 10.1016/J.NANOEN.2021.105822 [retrieved on 2021-01-27] * paragraph [0002]; figures 1,2 * * page 4, left-hand column; figure 4 * ----- | 1-4 | |
| X | US 2021/230396 A1 (NAKAHATA SHOKO [JP] ET AL) 29 July 2021 (2021-07-29) * claims; examples * ----- | 1-4 | TECHNICAL FIELDS SEARCHED (IPC) C08L C08K |
| X | US 5 964 969 A (SANDSTROM PAUL HARRY [US] ET AL) 12 October 1999 (1999-10-12) * examples * ----- | 1-4 | |
| X | US 2010/041815 A1 (MIYAZAKI TATSUYA [JP]) 18 February 2010 (2010-02-18) * claims; examples * ----- -/-- | 1-4 | |

The present search report has been drawn up for all claims

| Place of search | Date of completion of the search | Examiner |
|---|---|---|
| Munich | 20 February 2023 | Masson, Patrick |

EPO FORM 1503 03.82 (P04C01)

page 1 of 2

| Europäisches Patentamt European Patent Office Office européen des brevets | **EUROPEAN SEARCH REPORT** | Application Number EP 22 19 7663 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 914 355 B1 (HANKOOK TIRE CO LTD [KR]) 1 November 2018 (2018-11-01) * examples * ----- | 1-4 | |
| A | AMIT DAS ET AL: "Temperature Scanning Stress Relaxation of an Autonomous Self-Healing Elastomer Containing Non-Covalent Reversible Network Junctions", POLYMERS, vol. 10, no. 1, 19 January 2018 (2018-01-19), page 94, XP055626962, DOI: 10.3390/polym10010094 * pages 3,4; figures * ----- | 1-4 | |
| | | | TECHNICAL FIELDS SEARCHED (IPC) |

The present search report has been drawn up for all claims

| Place of search | Date of completion of the search | Examiner |
|---|---|---|
| Munich | 20 February 2023 | Masson, Patrick |

page 2 of 2

## ANNEX TO THE EUROPEAN SEARCH REPORT
## ON EUROPEAN PATENT APPLICATION NO.

EP 22 19 7663

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2023

| Patent document cited in search report | | Publication date | Patent family member(s) | | Publication date |
|---|---|---|---|---|---|
| US 2021230396 | A1 | 29-07-2021 | CN | 111770960 A | 13-10-2020 |
| | | | EP | 3730548 A1 | 28-10-2020 |
| | | | JP | WO2020022324 A1 | 12-08-2021 |
| | | | US | 2021230396 A1 | 29-07-2021 |
| | | | WO | 2020022324 A1 | 30-01-2020 |
| US 5964969 | A | 12-10-1999 | CA | 2240027 A1 | 19-12-1998 |
| | | | US | 5964969 A | 12-10-1999 |
| US 2010041815 | A1 | 18-02-2010 | DE | 102009032975 A1 | 25-02-2010 |
| | | | JP | 5147788 B2 | 20-02-2013 |
| | | | JP | 2010065208 A | 25-03-2010 |
| | | | US | 2010041815 A1 | 18-02-2010 |
| KR 101914355 | B1 | 01-11-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013125614 A